# EUROPEAN PATENT APPLICATION

(11) **EP 4 790 246 A1**
(43) Date of publication of application: **12.08.2026**
(21) Application number: 26151227.1
(22) Date of filing: 12.01.2026
(51) Int. Cl.: F02B 53/04, F02B 55/16, F02M 26/14, F02M 26/17, F02M 26/22, F02M 26/30, F02M 26/41, F02M 26/05

(54) **EGR SYSTEM FOR ROTARY ENGINE, ROTARY ENGINE AND VEHICLE**

(30) Priority: 07.02.2025 JP 2025019032
(71) Applicant: Mazda Motor Corporation, Aki-gun Hiroshima 730-8670 (JP)
(72) Inventor: Tetsuya, Nomoto, Hiroshima, 730-8670 (JP); Yuuta, Kameoka, Hiroshima, 730-8670 (JP); Mitsuhiro, Iseda, Hiroshima, 730-8670 (JP)
(74) Representative: Müller-Boré & Partner Patentanwälte PartG mbB

(57) **Abstract**

An EGR system for a rotary engine 2 includes: side housings 232, 233, 242 each having a side exhaust port 43; rotor housings 231, 241 each having a peripheral exhaust port 44 opened at timing later than the side exhaust port; a side exhaust passage 18 connected to the side exhaust port; a peripheral exhaust passage 19 connected to a peripheral exhaust port; an EGR passage 6 recirculating some of exhaust gas as EGR gas to an intake passage 11, the exhaust gas being discharged from the peripheral exhaust port; an EGR cooler 68 located in the middle of the EGR passage and cooling the EGR gas. The EGR passage has an in-housing EGR passage 61 formed inside the side housing, and the in-housing EGR passage is in contact with a cooling water passage 7 having the side housing.

## Description

### [Technical Field]

The present invention relates to an EGR system for a rotary engine, a rotary engine and a vehicle.

### [Background Art]

A rotary engine is disclosed in Patent Literature 1. This rotary engine includes a peripheral exhaust port and a side exhaust port. The peripheral exhaust port is arranged to be opened at later timing than the side exhaust port. A temperature of exhaust gas discharged from the peripheral exhaust port is relatively low.

A side exhaust passage portion is connected to the side exhaust port. A turbine of a turbocharger is provided in the side exhaust passage portion. The high-temperature exhaust gas is supplied to the turbine. Turbocharging efficiency is improved.

A peripheral exhaust passage portion is connected to the peripheral exhaust port. The peripheral exhaust passage portion bypasses the turbine and is connected to an exhaust passage portion downstream of the turbine. An EGR passage connects the peripheral exhaust passage portion and an intake passage portion. An EGR cooler is interposed in the middle of the EGR passage. The EGR cooler cools the exhaust gas. Since the temperature of the exhaust gas flowing through the peripheral exhaust passage portion is relatively low, a size of the EGR cooler can be suppressed to be small.

### [Citation List]

### [Patent Literature]

[Patent Literature 1] JP6531791B

### [Summary of Invention]

### [Technical Problem]

It is required to achieve both an improvement in output of the rotary engine and an improvement in exhaust emission performance. In the conventional rotary engine, an air-fuel ratio of air-fuel mixture is set to be richer in fuel than a stoichiometric air-fuel ratio such that a temperature of a catalytic device does not become excessively high during high-load operation. The fuel-rich air-fuel mixture can suppress a temperature increase of the catalytic device by the latent heat of vaporization of the fuel. Meanwhile, when the fuel-rich air-fuel ratio of the air-fuel mixture is set, the exhaust emission performance is deteriorated due to deterioration of purification performance of the catalytic device.

In order to maintain the air-fuel ratio of the air-fuel mixture at the stoichiometric air-fuel ratio during the high-load operation, it is necessary to take a measure to suppress the temperature increase of the catalytic device without using the latent heat of vaporization of the fuel.

For example, recirculation of a large amount of EGR gas to an intake passage is effective in reducing the temperature of the exhaust gas and suppressing the temperature increase of the catalytic device. When a temperature of the EGR gas is lowered by using the EGR cooler, the temperature increase of the catalytic device can further be suppressed.

However, the large EGR cooler is required to significantly lower the temperature of the EGR gas. Since there is substantially no free space around the rotary engine, it is difficult to install the large EGR cooler around the rotary engine.

The technique disclosed herein lowers the temperature of the EGR gas without enlarging the EGR cooler.

### [Solution to Problem]

The present invention relates to an EGR system for a rotary engine, as defined in claim 1. For example, an EGR system for a rotary engine includes:
a side housing that is located on a side of a rotor supported by an eccentric shaft and has a side exhaust port;
a rotor housing that surrounds an outer periphery of the rotor and has a peripheral exhaust port opened at timing later than the side exhaust port;
a side exhaust passage that is connected to the side exhaust port;
a peripheral exhaust passage that is connected to the peripheral exhaust port;
an EGR passage that connects the peripheral exhaust passage and an intake passage and partially recirculates exhaust gas as EGR gas to the intake passage, the exhaust gas being discharged from the peripheral exhaust port; and
an EGR cooler that is located in the EGR passage, e.g., in the middle of the EGR passage, and cools the EGR gas, in which
the EGR passage has or is an in-housing EGR passage that is formed inside the side housing, in the in-housing EGR passage, an opening that is opened to an outer peripheral surface of the side housing being connected to the peripheral exhaust passage, and an outlet that is opened to the outer peripheral surface of the side housing being connected to the intake passage, and
the in-housing EGR passage is in contact with a cooling water passage provided to the side housing.

The rotary engine has the side exhaust port and the peripheral exhaust port. The peripheral exhaust port is opened at the timing later than the side exhaust port. A temperature of the exhaust gas discharged from the peripheral exhaust port is lower than a temperature of the exhaust gas discharged from the side exhaust port. The peripheral exhaust passage is connected to the peripheral exhaust port.

A side exhaust passage is connected to the side exhaust port. The temperature of the exhaust gas discharged from the side exhaust port is relatively high. The side exhaust passage may be connected to a turbine of a turbocharger, for example. Since the high-temperature exhaust gas is supplied to the turbine, turbocharging efficiency of the rotary engine is increased.

The rotary engine includes the EGR passage. The EGR passage connects the peripheral exhaust passage and the intake passage. The exhaust gas that has been discharged from the peripheral exhaust port is partially recirculated as the EGR gas to the intake passage through the EGR passage. Since the temperature of the exhaust gas discharged from the peripheral exhaust port is relatively low, a temperature of the EGR gas also becomes low.

The rotary engine also includes the EGR cooler. The EGR cooler is located in the middle of the EGR passage and cools the EGR gas. The temperature of the EGR gas to be recirculated to the intake passage is further lowered.

The EGR passage has the in-housing EGR passage. The in-housing EGR passage is formed inside the side housing. Thus, the in-housing EGR passage does not consume a space around the rotary engine.

The in-housing EGR passage is in contact with the cooling water passage that is provided to the side housing. The cooling water is cooling water of the rotary engine. While the exhaust gas, that is, the EGR gas flows through the in-housing EGR passage, heat is exchanged between the EGR gas and the cooling water. The temperature of the EGR gas is lowered. The in-housing EGR passage has a function as the EGR cooler without using the space around the rotary engine.

The EGR gas is cooled in each of the in-housing EGR passage and the EGR cooler until being recirculated to the intake passage. Even when the EGR cooler is not in a large size, the temperature of the EGR gas to be recirculated to the intake passage is sufficiently lowered. The EGR cooler may cool the EGR gas by using the cooling water of the rotary engine, for example.

Since the temperature of the EGR gas can be lowered, it is possible to simultaneously improve output of the rotary engine and improve exhaust emission performance by a large amount of the low-temperature EGR gas.

The EGR cooler may be interposed between the outlet of the in-housing EGR passage and the intake passage.

After flowing through the in-housing EGR passage, the EGR gas flows through the EGR cooler and reaches the intake passage. The in-housing EGR passage and the EGR cooler can efficiently cool the EGR gas.

The side housing may at least include: a first side housing that is located on a first side with the rotor housing being interposed and has a first side exhaust port; and a second side housing that is located on a second side with the rotor housing being interposed and has a second side exhaust port,
the second side housing may further have an intake port, and the first side housing may not have an intake port, and
the in-housing EGR passage may be formed in the first side housing.

The in-housing EGR passage is formed in the first side housing. Since the first side housing does not have the intake port, a space for forming the in-housing EGR passage can be secured.

The eccentric shaft may extend in a horizontal direction,
the intake port may be located above the second side exhaust port in the second side housing, and
the in-housing EGR passage may be located above the first side exhaust port in the first side housing.

A portion in which the intake port is formed in the second side housing is a free space in the first side housing. The in-housing EGR passage can be formed in the free space.

The inlet of the in-housing EGR passage may be opened laterally to a side surface of the first side housing, and the outlet of the in-housing EGR passage may be opened upward near a vertex of the first side housing, and
at a position above the first side housing, the EGR cooler may extend toward the side surface from a connector that is connected to the outlet of the in-housing EGR passage.

Since the in-housing EGR passage extends from a side surface side of the first side housing to the vicinity of the vertex of the first side housing, a sufficient passage length can be secured. The in-housing EGR passage can sufficiently cool the EGR gas.

At the position above the first side housing, the EGR cooler extends toward the side surface of the first side housing from the connector that is connected to the outlet of the in-housing EGR passage. A passage for the EGR gas in the EGR cooler can also secure a sufficient passage length. The EGR cooler can sufficiently cool the EGR gas.

A throttle valve that is interposed in the intake passage, e.g., in the middle of the intake passage, may be located above the second side housing.

The EGR cooler can be compactly arranged at the position above the first side housing in a manner to avoid the throttle valve.

The first side housing may have a lubricating oil passage, through which lubricating oil is supplied to the eccentric shaft, on an opposite side of the vertex of the first side housing from the side surface to which the inlet of the in-housing EGR passage is opened, and
the in-housing EGR passage may extend around the eccentric shaft from the side surface of the first side housing to the vicinity of the lubricating oil passage beyond the vertex.

Since the in-housing EGR passage extends to the opposite side from the side surface of the first side housing beyond the vertex of the first side housing, the passage length of the in-housing EGR passage is further increased. The in-housing EGR passage can sufficiently cool the EGR gas.

### [Advantageous Effect]

The EGR system for the rotary engine can lower the temperature of the EGR gas without enlarging the EGR cooler.

### [Brief Description of Drawings]

[FIG. 1] FIG. 1 illustrates an engine system including a rotary engine.
[FIG. 2] FIG. 2 is a side view of the engine system.
[FIG. 3] FIG. 3 is a cross-sectional view of a rotor housing of the rotary engine.
[FIG. 4] FIG. 4 is a view illustrating arrangement of an EGR passage and arrangement of a cooling water passage in the rotary engine.
[FIG. 5] FIG. 5 illustrates a relationship between an eccentric angle and an opening area of each port.
[FIG. 6] FIG. 6 is a cross-sectional view taken along line VI-VI in FIG. 2.

### [Description of Embodiments]

Hereinafter, an embodiment of an EGR system for a rotary engine will be described with reference to the drawings. The EGR system for the rotary engine described herein is merely illustrative.

### (Overall Configuration of Engine System)

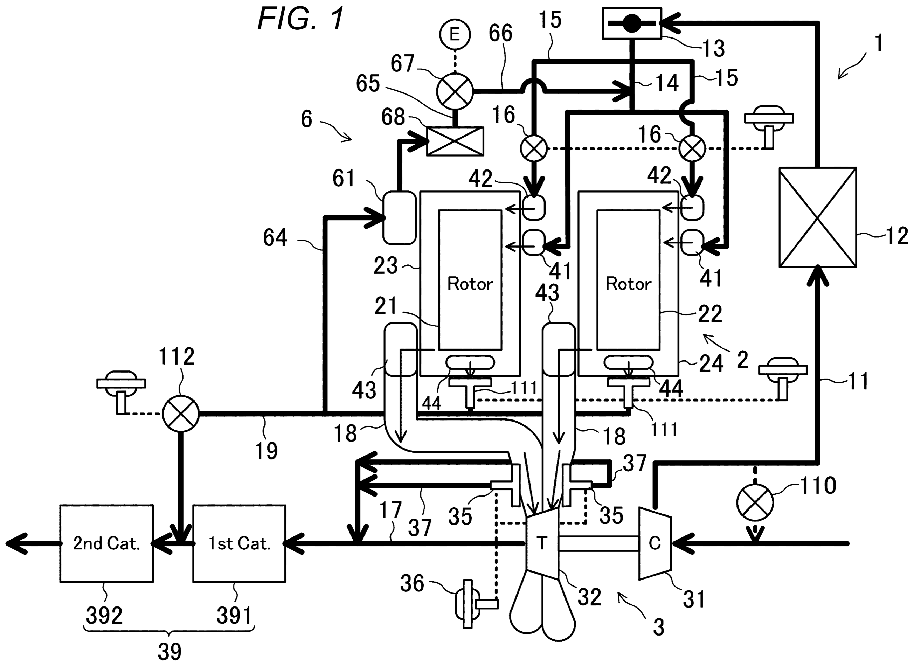

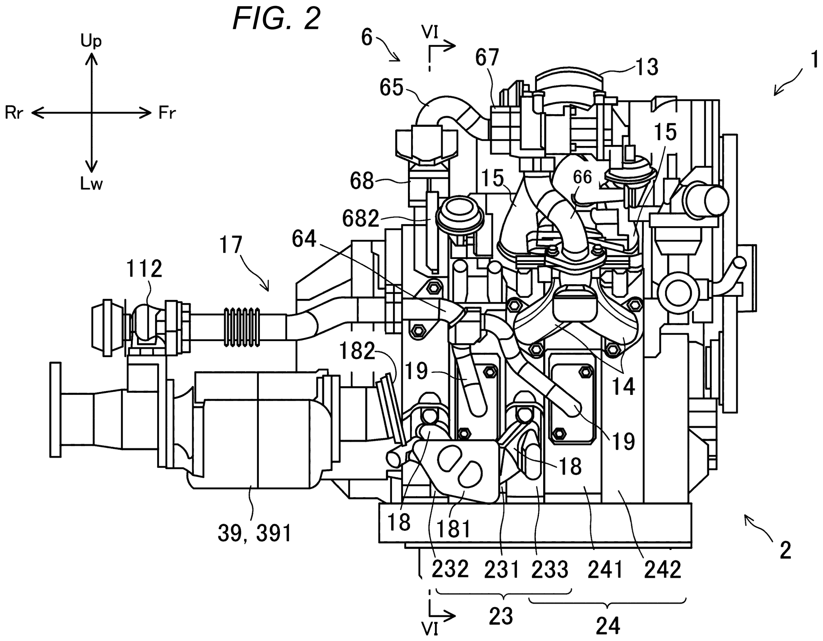

FIG. 1 illustrates an engine system 1. FIG. 2 is a side view of the engine system 1. The engine system 1 is mounted on a vehicle or an automobile, e.g., a four-wheeled motor vehicle. The engine system 1 generates a driving force for travel of the four-wheeled motor vehicle or a driving force for generation of electric power.

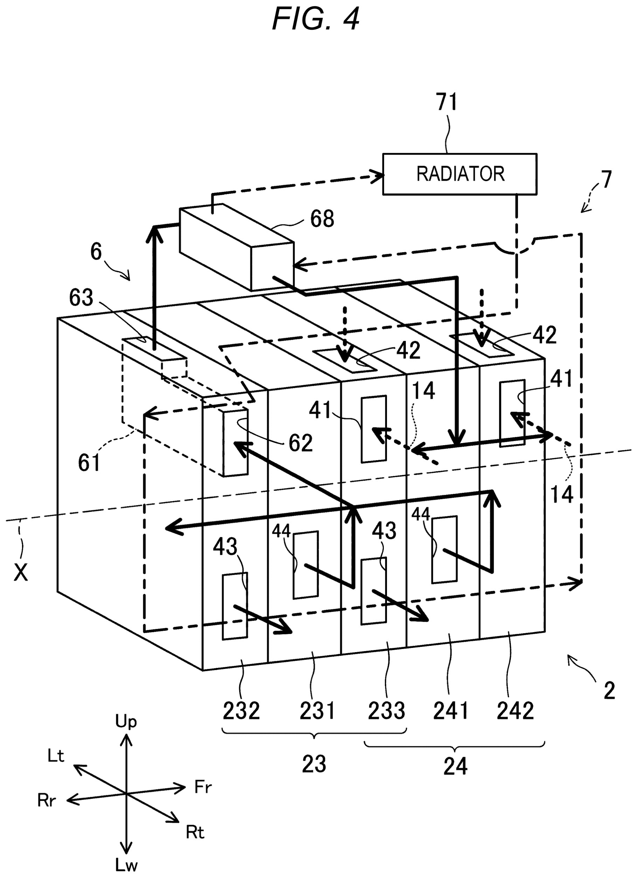

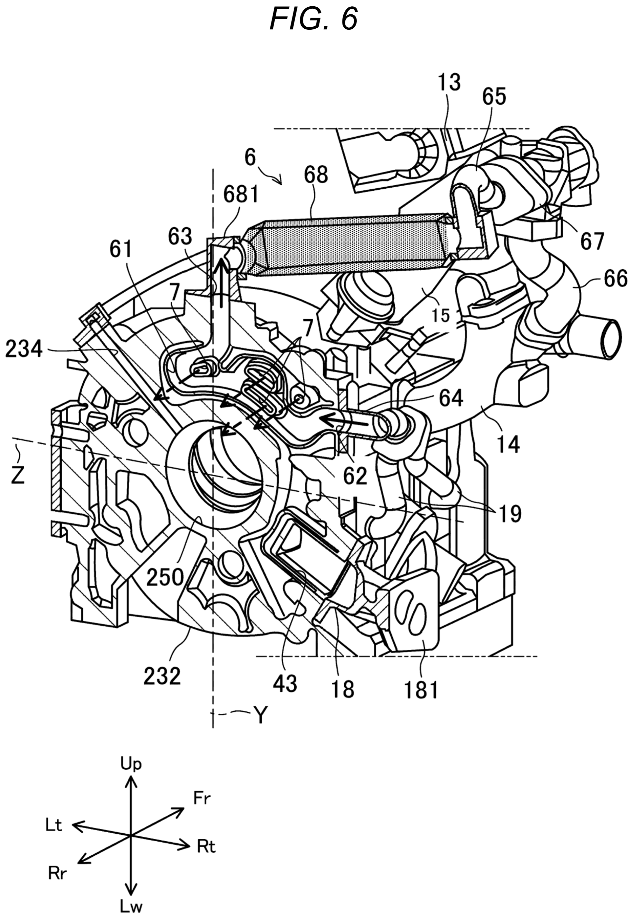

In the following description, a front direction Ft, a rear direction Rr, a right direction Rt, a left direction Lt, an up direction Up, and a down direction Lw will be defined as follows with a state where the engine system 1 is mounted on the vehicle being a reference. The front direction Ft corresponds to a front direction of the vehicle and is rightward on the sheet of FIG. 2. The rear direction Rr corresponds to a rear direction of the vehicle and is leftward on the sheet of FIG. 2. The right direction Rt corresponds to a right direction of an occupant who is seated on a seat of the vehicle, and is forward to the right on the sheet of FIG. 4 or 6. The left direction Lt corresponds to a left direction of the occupant who is seated on the seat of the vehicle, and is rearward to the left on the sheet of FIG. 4 or 6.

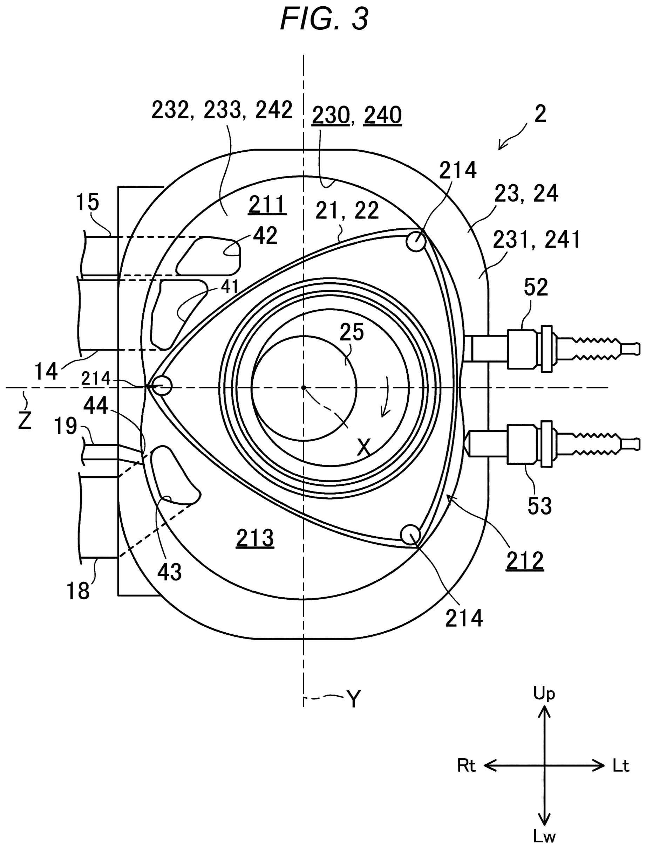

In FIG. 3, the right direction Rt is leftward on the sheet, and the left direction Lt is rightward on the sheet. The up direction Up and the down direction Lw respectively correspond to an up direction and a down direction of the vehicle, and are upward and downward on the sheet of each of the drawings. The front direction Ft, the rear direction Rr, the right direction Rt, the left direction Lt, the up direction Up, and the down direction Lw in the following description will be used only in the description of the engine system 1 and a rotary engine 2, and may not be used to limit structures of the engine system 1 and the rotary engine 2.

The engine system 1 includes the rotary engine 2. The rotary engine 2 has one or more rotors, e.g., two rotors that are a first rotor 21 and a second rotor 22.

For example, the first rotor 21 and the second rotor 22 have different rotational phases from each other. The first rotor 21 is accommodated in a first housing 23, which will be described below, and the second rotor 22 is accommodated in a second housing 24. Details of the structure of the rotary engine 2 will be described below.

The rotary engine 2 is mounted on the vehicle such that an eccentric shaft 25 (see FIG. 3) as an output shaft extends e.g., in a front-rear direction of the vehicle. The rotary engine 2 may be muted on the vehicle such that the eccentric shaft 25 extends in a width direction of the vehicle.

The engine system 1 includes an intake passage 11. The intake passage 11 is connected to the rotary engine 2. The intake passage 11 delivers intake air to the rotary engine 2.

A compressor 31 of a turbocharger 3 may be located in the intake passage 11, e.g., in the middle of the intake passage 11. The compressor 31 compresses the intake air.

A reference sign 110 denotes a circulation valve 110. For example, when an accelerator operation amount becomes zero at a high turbocharging pressure, the circulation valve 110 opens a circulation passage that connects an inlet and an outlet of the compressor 31.

An intercooler 12 may be located downstream of the compressor 31 in the intake passage 11. The intercooler 12 cools the intake air that has been compressed by the compressor 31.

A throttle valve 13 may be located downstream of the intercooler 12 in the intake passage 11. The throttle valve 13 adjusts an amount of the intake air to be supplied to the rotary engine 2.

On a downstream side of the throttle valve 13, the intake passage 11 may have a first intake pipe 14 and a second intake pipe 15. The first intake pipe 14 and the second intake pipe 15 are each connected to the throttle valve 13 and are independent of each other. For example, the first intake pipe 14 is connected to a primary intake port 41, which will be described below. The rotary engine 2 has one or more primary intake ports, e.g., the two primary intake ports 41 that are the primary intake port 41 corresponding to the first rotor 21 (or for the first rotor 21), and the primary intake port 41 corresponding to the second rotor 22 (or for the second rotor 22). The first intake pipe 14 may be branched into two in the middle, and branched portions are respectively connected to the two primary intake ports 41 (see also FIG. 2).

The second intake pipe 15 may be connected to a secondary intake port 42, which will be described below. The rotary engine 2 has one or more secondary intake ports 42, e.g., the two secondary intake ports 42 that are the secondary intake port 42 corresponding to the first rotor 21 (or for the first rotor 21) and the secondary intake port 42 corresponding to the second rotor 22 (or for the second rotor 22). The second intake pipe 15 may be branched into two in the middle, and branched portions are respectively connected to the two secondary intake ports 42.

An on-off valve 16 may be provided in the second intake pipe 15, or in the middle of the second intake pipe 15. The on-off valve 16 opens and/or closes the second intake pipe 15. The on-off valve 16 closes when an engine speed is low (or lower than a threshold) and an engine load is high (or higher than a threshold), for example, and opens otherwise.

For example, the engine system 1 includes an exhaust passage 17. The exhaust passage 17 is connected to the rotary engine 2. The exhaust passage 17 discharges exhaust gas from the rotary engine 2.

As will be described below, the rotary engine 2 has a side exhaust port 43 and a peripheral exhaust port 44. The exhaust passage 17 may have: a side exhaust passage 18 connected to the side exhaust port 43; and a peripheral exhaust passage 19 connected to the peripheral exhaust port 44.

The rotary engine 2 has one or more side exhaust ports 43, e.g., the two side exhaust ports 43 that are the side exhaust port 43 corresponding to the first rotor 21 (or fo the first rotor 21) and the side exhaust port 43 corresponding to the second rotor 22 (or for the second rotor 22). The side exhaust passage 18 may include a plurality of independent side exhaust passages, e.g., the two independent side exhaust passages 18 that are respectively connected to the two side exhaust ports 43.

The rotary engine 2 has one or more peripheral exhaust ports 44, e.g., the two peripheral exhaust ports 44 that are the peripheral exhaust port 44 corresponding to the first rotor 21 (of for the first rotor 21) and the peripheral exhaust port 44 corresponding to the second rotor 22 (or for the second rotor 22). The peripheral exhaust passage 19 is connected to each of the two peripheral exhaust ports 44 and are merged into one in the middle.

A turbine 32 of the turbocharger 3 may be located in the exhaust passage 17, or in the middle of the exhaust passage 17. The two side exhaust passages 18 are connected to the turbine 32. The turbine may be is a so-called twin scroll turbine.

A turbine housing may be partitioned into two spaces. The two side exhaust passages 18 are respectively connected to the two spaces of the turbine housing. The two independent side exhaust passages 18 suppresses exhaust interference.

In FIG. 2, the turbocharger 3 is removed. This is to show the peripheral exhaust port 44 and the peripheral exhaust passage 19. A reference sign 181 in FIG. 2 denotes a flange 181 to which an inlet portion of the turbine 32 of the turbocharger 3 is attached. A reference sign 182 in FIG. 2 denotes an end 182 of the exhaust passage 17 to which an outlet of the turbine 32 of the turbocharger 3 is connected.

The turbocharger 3 may have a bypass passage 37. The bypass passage 37 is a passage that is connected to each of the two side exhaust passages 18 and bypasses the turbine 32.

The turbocharger 3 may also have a turbine bypass valve 35. The turbine bypass valve 35 opens and/or closes the bypass passage 37. A valve actuator 36 opens and/or closes the turbine bypass valve 35.

A catalytic converter 39 may be located downstream of the turbine 32 in the exhaust passage 17. The catalytic converter 39 purifies the exhaust gas.

For example, the catalytic converter 39 includes a first catalytic converter 391 and a second catalytic converter 392. The first catalytic converter 391 is a pre-catalytic converter located relatively upstream, and the second catalytic converter 392 is a post-catalytic converter located relatively downstream. The first catalytic converter 391 and the second catalytic converter 392 may be arranged in series on the downstream side of the turbine 32.

The first catalytic converter 391 and the second catalytic converter 392 may each include a three-way catalyst, for example. The three-way catalyst oxidizes hydrocarbons and carbon monoxide in the exhaust gas to carbon dioxide, and reduces nitrogen oxides to nitrogen. The second catalytic converter 392 may also include a gasoline particulate filter (GPF). The GPF catches particulate matter (PM) in the vent.

The engine system 1 includes an EGR passage 6. The EGR passage 6 connects the peripheral exhaust passage 19 and the intake passage 11 e.g., the first intake pipe 14, to each other. The exhaust gas that has been discharged from the peripheral exhaust port 44 is recirculated as external EGR gas to the first intake pipe 14, that is, the intake passage 11. Details of a structure of the EGR passage 6 will be described below.

An EGR valve 67 may be located in the EGR passage 6, or in the middle of the EGR passage 6. The EGR valve 67 adjusts an external EGR amount by adjusting an opening amount of the EGR passage 6.

An EGR cooler 68 is also located in the EGR passage 6, or in the middle of the EGR passage 6 (see also FIG. 6). The EGR cooler 68 cools the EGR gas by using cooling water of the rotary engine 2.

The peripheral exhaust passage 19 is connected a portion of the exhaust passage 17 e.g., between the first catalytic converter 391 and the second catalytic converter 392. The peripheral exhaust passage 19 may bypass the turbine 32.

In the peripheral exhaust passage 19, a peripheral shutter valve 111 may be located near each of the two peripheral exhaust ports 44. The peripheral shutter valves 111 open and/or close the peripheral exhaust ports 44, respectively.

An EGR bypass valve 112 may also be located in the peripheral exhaust passage 19. The EGR bypass valve 112 is located e.g., between the portion of the peripheral exhaust passage 19 connected to the EGR passage 6 and the portion thereof connected to the exhaust passage 17. When the EGR bypass valve 112 is opened, the exhaust gas partially bypasses the turbine 32 and is supplied or directly supplied to the second catalytic converter 392.

### (Structure of Rotary Engine)

FIG. 3 illustrates the structure of the rotary engine 2. FIG. 3 illustrates the rotors 21, 22 and the housings 23, 24 that respectively accommodate the rotors 21, 22. FIG. 4 schematically illustrates the rotary engine 2.

The rotary engine 2 has one or more spark plugs, e.g., a first spark plug 52 and a second spark plug 53 in each of the housings 23, 24. As illustrated in FIG. 3, the first spark plug 52 and the second spark plug 53 are aligned in a rotational direction of each of the rotors 21, 22. The first spark plug 52 and the second spark plug 53 forcibly ignite air-fuel mixture in each of the housings 23, 24.

The rotary engine 2 may also has an injector in each of the housings 23, 24. The injectors inject fuel into the housings 23, 24, respectively.

The rotary engine 2 has the first housing 23. The first housing 23 includes a first rotor housing 231, a first side housing 232, and a second side housing 233.

The first rotor housing 231 surrounds an outer periphery of the first rotor 21. The first side housing 232 is located on a first side of the first rotor housing 231. The first side is a rear side of the first rotor housing 231. The second side housing 233 is located on a second side of the first rotor housing 231.

For example, the second side is a front side of the first rotor housing 231. The second side housing 233 may be an intermediate housing that is located between the first rotor housing 231 and a second rotor housing 241, which will be described below.

The rotary engine 2 may have the second housing 24. The second housing 24 includes the second rotor housing 241, the second side housing 233, and a third side housing 242.

The second rotor housing 241 surrounds an outer periphery of the second rotor 22. The second side housing 233 may be located on the first side of the second rotor housing 241. The first side is the rear side of the second rotor housing 241. The third side housing 242 is located on the second side of the second rotor housing 241. The second side is the front side of the second rotor housing 241.

For example, as illustrated in FIG. 3, the rotor housings 231, 241 have trochoidal inner peripheral surfaces 230, 240, respectively. Each of the rotors 21, 22 has a substantially triangular shape.

The rotors 21, 22 are supported for planetary rotary motion about the eccentric shaft 25. The rotors 21, 22 rotate about the eccentric shaft 25 such that the three vertices move along the trochoidal inner peripheral surfaces 230, 240, respectively.

An apex seal 214 that is attached to each of the three vertices of the rotors 21, 22 keeps airtightness between adjacent working chambers. The rotors 21, 22 respectively partition the inside of the housings 23, 24 into three working chambers that are a first chamber 211, a second chamber 212, and a third chamber 213.

With rotation of the rotors 21, 22 indicated by an arrow in FIG. 3, the first chamber 211, the second chamber 212, and the third chamber 213 may vary around the eccentric shaft 25. In each of the first chamber 211, the second chamber 212, and the third chamber 213, an intake stroke, a compression stroke, an expansion stroke, and an exhaust stroke are sequentially performed.

For example, the rotors 21, 22 rotate clockwise in FIG. 3. Each of the housings 23, 24 is divided into an upper left region, an upper right region, a lower right region, and a lower left region by a long axis Y and a short axis Z, each of which passes through a rotation center X. In the working chamber, the intake stroke is generally performed in the upper left region, the compression stroke is generally performed in the upper right region, the expansion stroke is generally performed in the lower right region, and the exhaust stroke is generally performed in the lower left region.

In the rotary engine 2, a single stroke in the single working chamber may correspond to a period in which the eccentric shaft 25 rotates 270 degrees. In the single working chamber, a cycle that includes the intake stroke, the compression stroke, the expansion stroke, and the exhaust stroke may correspond to a period in which the eccentric shaft 25 rotates 1080 degrees.

A phase of the second chamber 212 is delayed by 360 degrees from a phase of the first chamber 211. A phase of the third chamber 213 is delayed by 360 degrees from the phase of the second chamber 212. The phase of the second rotor 22 may be shifted by 180 degrees from the phase of the first rotor 21.

As illustrated in FIG. 3 or FIG. 4, the primary intake ports 41 and the secondary intake ports 42 are formed in the second side housing 233 and the third side housing 242. The second side housing 233 and the third side housing 242 each have the primary intake port 41 and the secondary intake port 42. The first side housing 232 may have neither the primary intake port 41 nor the secondary intake port 42.

For example, inlets of the primary intake ports 41 are opened laterally to right surfaces of the second side housing 233 and the third side housing 242. Inlets of the secondary intake port 42 are located above the inlets of the primary intake ports 41.

Outlets of the primary intake ports 41 and the secondary intake ports 42 are opened and/or closed in conjunction with the rotation of the rotors 21, 22. For example, the outlets of the primary intake ports 41 and the secondary intake ports 42 are located in the upper left region of the housings 23, 24. The primary intake port 41 and the secondary intake port 42 communicate with the inside of the respective working chamber during the intake stroke.

The side exhaust ports 43 are formed in the first side housing 232 and the second side housing 233. Inlets of the side exhaust ports 43 are opened and/or closed in conjunction with the rotation of the rotors 21, 22.

For example, the inlets of the side exhaust ports 43 are located in the lower left regions of the housings 23, 24. Each of the side exhaust ports 43 communicates with the inside of the respective working chamber during the exhaust stroke. In FIG. 3, the inlet of the side exhaust port 43 and the outlets of the primary intake port 41 and the secondary intake port 42 are illustrated in a manner to be opened to the same surface of the side housing 232, 233, 242, but these may not be opened to the same surface.

For example, outlets of the side exhaust ports 43 are opened laterally to right surfaces of the first side housing 232 and the second side housing 233. In the second side housing 233, the inlet of the primary intake port 41 is located above the outlet of the side exhaust port 43.

The peripheral exhaust ports 44 are formed in the first rotor housing 231 and the second rotor housing 241. Inlets of the peripheral exhaust ports 44 are opened to the trochoidal inner peripheral surfaces 230, 240 of the first rotor housing 231 and the second rotor housing 241.

The inlets of the peripheral exhaust ports 44 are opened and/or closed in conjunction with the rotation of the rotors 21, 22. The inlets of the peripheral exhaust ports 44 may be located in the lower left regions of the housings 23, 24. Each of the peripheral exhaust ports 44 communicates with the inside of the respective working chamber during the exhaust stroke.

For example, outlets of the peripheral exhaust ports 44 are opened laterally to right surfaces of the first rotor housing 231 and the second rotor housing 241.

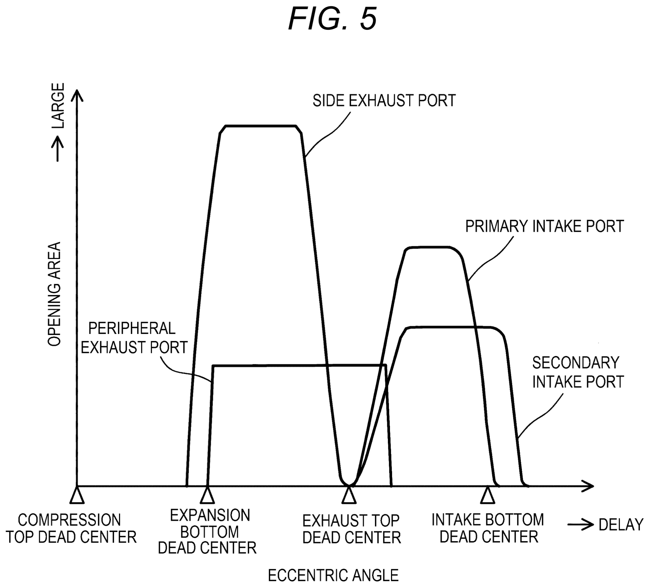

FIG. 5 illustrates an exemplary relationship between an eccentric angle as a rotation angle of the eccentric shaft 25 and an opening area of each of the ports 41, 42, 43, 44.

The primary intake port 41 may start being opened near exhaust top dead center and may be closed at timing slightly after passing intake bottom dead center. Meanwhile, the secondary intake port 42 may start being opened near the exhaust top dead center as in the case of the primary intake port 41, but may be closed at timing after passing the intake bottom dead center and later than the primary intake port 41.

The peripheral exhaust port 44 is opened at timing later than the side exhaust port 43. In addition, the side exhaust port 43 may be provided such that the closing timing thereof is not later than the exhaust top dead center. The peripheral exhaust port 44 may be provided such that the closing timing thereof is later than the exhaust top dead center.

For example, in the working chamber during the intake stroke, a period in which the side exhaust port 43 is opened does not overlap a period in which the primary intake port 41 and the secondary intake port 42 are opened. Meanwhile, in the working chamber during the intake stroke, a period in which the peripheral exhaust port 44 is opened overlaps the period in which the primary intake port 41 and the secondary intake port 42 are opened.

When the peripheral shutter valve 111 is opened, an internal EGR amount through the peripheral exhaust port 44 is increased. The internal EGR means that the exhaust gas in the previous stroke is introduced into the next stroke through the peripheral exhaust port 44.

### (Configuration of EGR Passage)

For example, during high-speed, high-load operation of the rotary engine 2, the peripheral shutter valve 111 is opened. In addition, the EGR valve 67 is opened during the high-speed, high-load operation.

The exhaust gas is at least partially recirculated as the external EGR gas to the intake passage 11. The introduction of the external EGR gas during the high-speed, high-load operation slows combustion and is advantageous in lowering a temperature of the exhaust gas. As will be described below, temperatures of the first catalytic converter 391 and the second catalytic converter 392 may be suppressed from becoming excessively high e.g., during the high-speed, high-load operation.

For example, during the high-speed, high-load operation, the EGR bypass valve 112 is opened. Of the exhaust gas that is discharged through the peripheral exhaust port 44, excess exhaust gas excluding the external EGR gas is delivered to the second catalytic converter 392 in the exhaust passage 17. The second catalytic converter 392 purifies the exhaust gas that is discharged from the peripheral exhaust port 44.

For example, during the high-speed, high-load operation, the turbine bypass valve 35 is closed. The exhaust gas that is discharged through the side exhaust port 43 passes through the turbine 32 and flows into the exhaust passage 17. The turbocharger 3 performs turbocharging. The rotary engine 2 can recirculate a large amount of EGR gas.

The side exhaust port 43 is a port that is opened at the timing earlier than the peripheral exhaust port 44. The exhaust gas that is supplied from the side exhaust port 43 to the turbine 32 through the side exhaust passage 18 has high energy. The turbocharger 3 can efficiently turbocharge the rotary engine 2 by using a blowdown pressure wave.

When the EGR bypass valve 112 is opened, the exhaust gas at least partially bypasses the turbine 32 and is delivered to the second catalytic converter 392. For example, during the high-speed, high-load operation, the peripheral shutter valve 111 and the EGR bypass valve 112 enable adjustment of the turbocharging pressure.

In the rotary engine 2, the turbine bypass valve 35 may not be opened to adjust the turbocharging pressure. In the case where the turbine bypass valve 35 is opened, the exhaust gas that remains at the high temperature due to bypassing of the turbine 32 is supplied or directly supplied to the first catalytic converter 391. A temperature of the first catalytic converter 391 possibly becomes excessively high. However, since the turbine bypass valve 35 is not opened, the excessive increase in the temperature of the first catalytic converter 391 is suppressed.

Since the peripheral exhaust port 44 is opened at the timing later than the side exhaust port 43, the exhaust gas that is supplied from the peripheral exhaust port 44 to the second catalytic converter 392 through the peripheral exhaust passage 19 has the relatively low energy. The excessive increase in the temperature of the second catalytic converter 392 is suppressed.

Thus, the excessive temperature increase is suppressed for both the first catalytic converter 391 and the second catalytic converter 392 during the high-speed, high-load operation.

In order to improve exhaust emission performance, the engine system 1 may keep an air-fuel ratio of the air-fuel mixture at a stoichiometric air-fuel ratio even during the high-speed, high-load operation. When the air-fuel ratio of the air-fuel mixture is the stoichiometric air-fuel ratio, the engine system 1 can ensure high purification performance of the catalytic converter 39.

The high purification performance can be ensured. However, since the air-fuel ratio of the air-fuel mixture is kept at the stoichiometric air-fuel ratio, an effect of suppressing the temperature increase of the catalytic device by latent heat of vaporization of the fuel cannot be exerted. This is because the temperature suppression effect by the latent heat of vaporization is exerted when the air-fuel ratio of the air-fuel mixture is richer in the fuel than the stoichiometric air-fuel ratio. The engine system 1 may need a measure for suppressing the temperature increase of the catalytic converter 39.

For example, the engine system 1 lowers the temperature of the exhaust gas by recirculating the large amount of the EGR gas to the intake passage 11, and thereby suppresses the temperature increase of the catalytic converter 39. When a temperature of the EGR gas is lowered by using the EGR cooler 68, the temperature increase of the catalytic converter 39 can further be suppressed.

However, a large EGR cooler is required to significantly lower the temperature of the EGR gas. It is difficult to install the large EGR cooler around the rotary engine 2.

Since the engine system 1 has a characteristic structure of the EGR passage 6, it is possible to lower the temperature of the EGR gas without enlarging the EGR cooler 68.

FIG. 4 schematically illustrates arrangement of the EGR passage 6 and arrangement of a cooling water passage 7 in the rotary engine 2. Broken arrows in FIG. 4 indicate flows of the intake air. Solid arrows indicate flows of the exhaust gas. Two-dot chain arrows indicate flows of the cooling water along the cooling water passage 7. FIG. 6 is a cross-sectional view taken along line VI-VI in FIG. 2. The VI-VI cross section corresponds to a cross section of the first side housing 232.

As described above, the EGR passage 6 connects the peripheral exhaust passage 19 and the first intake pipe 14 in the intake passage 11. The EGR passage 6 has an in-housing EGR passage 61.

The in-housing EGR passage 61 is formed inside the first side housing 232. The in-housing EGR passage 61 has a gas inlet 62 and a gas outlet 63. The exhaust gas flows into the in-housing EGR passage 61 through the gas inlet 62, and flows out of the in-housing EGR passage 61 through the gas outlet 63.

The gas inlet 62 of the in-housing EGR passage 61 may be opened laterally to the right surface of the first side housing 232. The gas inlet 62 is located above the side exhaust port 43.

The gas outlet 63 of the in-housing EGR passage 61 may be opened upward near a vertex of the first side housing 232. The gas outlet 63 may overlap the long axis Y, for example.

The in-housing EGR passage 61 may be located in an upper portion of the first side housing 232. For example, at a position above a support hole 250 penetrated by the eccentric shaft 25 in the first side housing 232, the in-housing EGR passage 61 extends circumferentially around the eccentric shaft 25 from the gas inlet 62 toward the gas outlet 63.

For example, as illustrated in FIG. 4 or 6, the in-housing EGR passage 61 is located above the side exhaust port 43 that is formed in the first side housing 232.

The in-housing EGR passage 61 may also extend from the right surface of the first side housing 232 to a left side beyond the vertex. Here, a reference sign 234 in FIG. 6 denotes a lubricating oil passage 234.

The lubricating oil passage 234 supplies lubricating oil to a bearing of the eccentric shaft 25. For example, the lubricating oil passage 234 extends radially from a left portion of the first side housing 232. The in-housing EGR passage 61 extends to the vicinity of the lubricating oil passage 234.

The in-housing EGR passage 61 is in contact with the cooling water passage 7 of the first side housing 232. The in-housing EGR passage 61 and the cooling water passage 7 may be orthogonal to each other.

The exhaust gas that flows through the in-housing EGR passage 61 exchanges heat with the cooling water. While the exhaust gas flows through the in-housing EGR passage 61, the temperature thereof is lowered by the cooling water. A solid arrow in FIG. 6 indicates the flow of the exhaust gas, and two-dot chain arrows indicate flows of the cooling water.

As illustrated in FIG. 6, the EGR passage 6 may have a first EGR pipe 64. The first EGR pipe 64 connects the peripheral exhaust passage 19 and the in-housing EGR passage 61. For example, the first EGR pipe 64 connects a merged point of the two peripheral exhaust passages 19 and the gas inlet 62 of the in-housing EGR passage 61. The exhaust gas that has been discharged from the peripheral exhaust port 44 flows into the in-housing EGR passage 61 through the peripheral exhaust passage 19 and the first EGR pipe 64.

The EGR cooler 68 is connected to the gas outlet 63 of the in-housing EGR passage 61. In other words, the EGR cooler 68 is interposed between the gas outlet 63 of the in-housing EGR passage 61 and the intake passage 11. The exhaust gas that has been cooled in the in-housing EGR passage 61 flows into the EGR cooler 68.

An inlet of the EGR cooler 68 may be connected to the gas outlet 63 via a connector 681. The connector 681 is fixed to the vertex of the first side housing 232. The connector 681 protrudes upward from the vertex of the first side housing 232.

The EGR cooler 68 may be connected laterally to an upper end of the connector 681. In FIG. 6, the EGR cooler 68 is shaded for ease of understanding.

At a position above the first side housing 232, the EGR cooler 68 may extend toward the right surface from the vicinity of the vertex of the first side housing 232 (see FIG. 2 or 6). As illustrated in FIG. 2, the EGR cooler 68 is supported by the first side housing 232 via a bracket 682.

The EGR passage 6 may have a second EGR pipe 65. The second EGR pipe 65 connects an outlet of the EGR cooler 68 and the EGR valve 67. As illustrated in FIG. 2, the second EGR pipe 65 extends forward from the EGR cooler 68.

The EGR passage 6 may have a third EGR pipe 66. The third EGR pipe 66 connects the EGR valve 67 and the first intake pipe 14. More specifically, the third EGR pipe 66 is connected to the pre-branching first intake pipe 14.

For example, as illustrated in FIG. 4, the cooling water passage 7 mutually connects a radiator 71, the rotary engine 2, and the EGR cooler 68. The cooling water flows through the rotary engine 2 from the radiator 71, cools the rotary engine 2, and then flows into the EGR cooler 68. After cooling the exhaust gas in the EGR cooler 68, the cooling water flows back to the radiator 71.

The EGR passage 6 of the rotary engine 2 has or is the in-housing EGR passage 61. The in-housing EGR passage 61 is formed inside the first side housing 232. The in-housing EGR passage 61 is in contact with the cooling water passage 7 of the first side housing 232. While the EGR gas flows through the in-housing EGR passage 61, the heat is exchanged between the EGR gas and the cooling water.

The in-housing EGR passage 61 is formed inside the first side housing 232. Thus, the in-housing EGR passage 61 does not consume a space around the rotary engine 2. The in-housing EGR passage 61 has a function as the EGR cooler without using the space around the rotary engine 2.

After flowing through the in-housing EGR passage 61, the EGR gas is also cooled in the EGR cooler 68. Even when the EGR cooler 68 is not in the large size, the temperature of the EGR gas to be recirculated to the intake passage 11 is sufficiently lowered.

Since the temperature of the EGR gas can be lowered, the engine system 1 can simultaneously improve the output of the rotary engine 2 and improve the exhaust emission performance by the large amount of the low-temperature EGR gas during the high-speed, high-load operation of the rotary engine 2.

The first side housing 232 does not have an intake port. The first side housing 232 can secure a space for forming the in-housing EGR passage 61. In the first side housing 232, the in-housing EGR passage 61 is located above the side exhaust port 43. This position is a position where the primary intake port 41 and the secondary intake port 42 are formed in the second side housing 233. The in-housing EGR passage 61 can be formed in a free space inside the first side housing.

The first side housing 232 may have the relatively large free space. The in-housing EGR passage 61 extends long from a right surface side of the first side housing 232 to the vicinity of the lubricating oil passage 234 beyond the vertex. The in-housing EGR passage 61 can secure a sufficient passage length. The in-housing EGR passage 61 having the long passage length is advantageous for lowering the temperature of the EGR gas.

At the position above the first side housing 232, the EGR cooler 68 may extend toward the right surface of the first side housing 232 from the connector 681 that is connected to the gas outlet 63 of the in-housing EGR passage 61. For example, the EGR cooler 68 extends oppositely from the in-housing EGR passage 61. The passage for the EGR gas in the EGR cooler 68 can also secure a sufficient passage length. The EGR cooler 68 can sufficiently cool the EGR gas.

The EGR cooler 68 can be compactly installed around the rotary engine 2.

In addition, as illustrated in FIG. 2, the throttle valve 13 may be located above the second side housing 233, the second rotor housing 241, and the third side housing 242 of the rotary engine 2. The EGR cooler 68 can be compactly arranged at the position above the first side housing 232 in a manner to avoid the throttle valve 13.

### (Modified Examples)

The in-housing EGR passage 61 is not limited to being formed in the first side housing 232. The in-housing EGR passage 61 may be formed in the third side housing 242, for example. The third side housing 242 does not have the side exhaust port 43. The in-housing EGR passage may be formed in a free space of the third side housing 242, that is, at a position where the side exhaust port 43 is formed in the first or second side housing 232, 233. The in-housing EGR passage is in contact with the cooling water passage 7 of the third side housing 242. Also, in this case, the in-housing EGR passage has the function as the EGR cooler without using the space around the rotary engine 2.

The EGR cooler 68 may be located upstream of the in-housing EGR passage 61 instead of being located downstream of the in-housing EGR passage 61.

### [Reference Signs List]

11: intake passage
13: throttle valve
18: side exhaust passage
19: peripheral exhaust passage
2: rotary engine
21: first rotor
22: second rotor
231: first rotor housing
232: first side housing
233: second side housing
234: lubricating oil passage
241: second rotor housing
242: third side housing
25: eccentric shaft
41: primary intake port
42: secondary intake port
43: side exhaust port
44: peripheral exhaust port
6: EGR passage
61: in-housing EGR passage
62: inlet
63: outlet
68: EGR cooler
681: connector
7: cooling water passage

## Claims

1. An EGR system for a rotary engine (2), the EGR system comprising:
a side housing (232, 233, 242) that is located on a side of a rotor (21, 22) supported by an eccentric shaft (25) and has a side exhaust port (43);
a rotor housing (231, 241) that is configured to surround an outer periphery of the rotor (21, 22) and has a peripheral exhaust port (44) configured to be opened at timing later than the side exhaust port (43);
a side exhaust passage (18) that is connected to the side exhaust port (43);
a peripheral exhaust passage (19) that is connected to the peripheral exhaust port (44);
an EGR passage (6) that is configured to connect the peripheral exhaust passage (19) and an intake passage (11) and at least partially recirculate exhaust gas as EGR gas to the intake passage (11), the exhaust gas being discharged from the peripheral exhaust port (44); and
an EGR cooler (68) that is located in the EGR passage (6) and configured to cool the EGR gas, wherein
the EGR passage (6) has or is an in-housing EGR passage (61) that is formed inside the side housing (232, 233, 242),
in the in-housing EGR passage (61), an opening that is opened to an outer peripheral surface of the side housing (232, 233, 242) is connected to the peripheral exhaust passage (19),
an outlet (63) that is opened to the outer peripheral surface of the side housing (232, 233, 242) is connected to the intake passage (11), and
the in-housing EGR passage (61) is in contact with a cooling water passage (7) provided to the side housing (232, 233, 242).

2. The EGR system according to claim 1, wherein
the EGR cooler (68) is interposed between the outlet (63) of the in-housing EGR passage (61) and the intake passage (11).

3. The EGR system according to claim 1 or 2, wherein
the side housing (232, 233, 242) at least includes: a first side housing (232) that is located on a first side with the rotor housing (231) being interposed and has a first side exhaust port; and a second side housing (233) that is located on a second side with the rotor housing (231) being interposed and has a second side exhaust port.

4. The EGR system according to claim 1 or 2, wherein
the side housing (232, 233, 242) at least includes: a first side housing (232) that is located on a first side of the rotor housing (231); and a second side housing (233) that is located on a second side of the rotor housing (231).

5. The EGR system according to claim 3 or 4, wherein
the second side housing (233) further has an intake port (41, 42), and/or the first side housing (232) has no intake port, and
the in-housing EGR passage (61) is formed in the first side housing (232).

6. The EGR system according to claim 5, wherein
the eccentric shaft (25) is configured to extend in a horizontal direction,
the intake port (41, 42) is located above the second side exhaust port in the second side housing (233), and
the in-housing EGR passage (61) is located above the first side exhaust port in the first side housing (232).

7. The EGR system according to any one of claims 3 to 6, wherein
an inlet (62) of the in-housing EGR passage (61) is opened laterally to a side surface of the first side housing (232), and the outlet (63) of the in-housing EGR passage (61) is opened upward near a vertex of the first side housing (232), and
at a position above the first side housing (232), the EGR cooler (68) is configured to extend toward the side surface from a connector that is connected to the outlet (63) of the in-housing EGR passage (61).

8. The EGR system according to any one of claims 3 to 7, wherein
a throttle valve (13) that is interposed in the intake passage (11) is located above the second side housing (233).

9. The EGR system according to claim 7 or 8 referring to claim 7, wherein
the first side housing (232) has a lubricating oil passage (234), through which lubricating oil is supplied to a bearing of the eccentric shaft (25), on an opposite side of the vertex of the first side housing (232) from the side surface to which the inlet of the in-housing EGR passage (61) is opened, and
the in-housing EGR passage (61) is configured to extend around the eccentric shaft (25) from the side surface of the first side housing (232) to vicinity of the lubricating oil passage (234) beyond the vertex.

10. The EGR system according to claim 3 or 4, wherein
the side housing (232, 233, 242) further includes a third side housing (242),
the first side housing (232) and/or the second side housing (233) has the side exhaust port (43),
the third side housing (242) has no side exhaust port, and
the in-housing EGR passage (61) is formed in the third side housing.

11. The EGR system according to any one of claims 3 to 10, wherein
the second side is a front side of the rotor housing (231) and/or the first side is a rear side of the rotor housing (231).

12. An engine system (1) comprising:
a rotary engine (2) including an eccentric shaft (25) and a rotor (21, 22) supported by the eccentric shaft (25); and
the EGR system according to any one of the preceding claims.

13. The engine system (1) according to claim 12, further comprising a compressor (31) located in the intake passage (11).

14. A vehicle comprising the engine system (1) according to claim 13.

15. The vehicle according to claim 14, wherein the rotary engine (2) is mounted on the vehicle such that the eccentric shaft (25) extends in a front-rear direction of the vehicle or a width direction of the vehicle.
